# EUROPÄISCHE PATENTSCHRIFT

(11) **EP 2 785 819 B1**
(45) Veröffentlichungstag und Bekanntmachung des Hinweises auf die Patenterteilung: **23.05.2018**
(21) Anmeldenummer: 12823237.8
(22) Anmeldetag: 30.11.2012
(51) Int. Cl.: C10L 9/08

(54) **VERFAHREN SOWIE VORRICHTUNG ZUR HYDROTHERMALEN KARBONISIERUNG VON BIOMASSE**
METHOD AND DEVICE FOR THE HYDROTHERMAL CARBONIZATION OF BIOMASS
PROCÉDÉ ET DISPOSITIF DE CARBONISATION HYDROTHERMALE DE BIOMASSE

(30) Priorität: 02.12.2011 DE 102011055989
(43) Veröffentlichungstag der Anmeldung: 08.10.2014
(73) Patentinhaber: Reichhart, Thomas, 92551 Stulln (DE)
(72) Erfinder: Reichhart, Thomas, 92551 Stulln (DE)
(74) Vertreter: Glück Kritzenberger Patentanwälte PartGmbB
(86) Internationale Anmeldenummer: PCT/DE2012/100364
(87) Internationale Veröffentlichungsnummer: WO 2013/079061

(56) Entgegenhaltungen:
- EP-A1- 2 253 693
- WO-A1-2010/112230
- DE-A1-102009 055 976
- DE-A1-102010 000 580

## Beschreibung

Die Erfindung betrifft ein Verfahren zur hydrothermalen Karbonisierung von Biomasse gemäß dem Oberbegriff des Patentanspruchs 1 sowie eine Vorrichtung zur hydrothermalen Karbonisierung von Biomasse gemäß dem Oberbegriff des Patentanspruchs 10.

Unter Biomasse werden im Sinne der Erfindung sämtliche nachwachsenden Rohstoffe, d.h. pflanzliche Biomasse sowie davon abgeleitete tierische Biomasse und deren Stoffwechselprodukte verstanden, also beispielsweise Grüngut, Hackschnitzel, Pflanzen- und Pflanzenreste, Stroh, Silage, Reststoffe aus der Landwirtschaft, Papier- bzw. Klärschlämme etc..

Verfahren und Vorrichtungen zur hydrothermalen Karbonisierung von Biomasse sind aus dem Stand der Technik bereits bekannt. Die hydrothermale Karbonisierung bildet den natürlichen Entstehungsprozess von Braunkohle nach. Dabei wird Biomasse als Ausgangsstoff in einem Reaktor unter einem Druck im Bereich zwischen 10 bar und 35 bar und Temperaturen im Bereich zwischen 180°C und 240°C dehydratisiert und karbonisiert, wobei am Reaktorausgang dann ein Kohleschlamm entnommen werden kann. In diesem Kohleschlamm sind Kohlepartikel enthalten, die durch einen Trocknungs- und/oder Entwässerungsprozess dem Kohleschlamm entzogen werden können. Diese nach dem Trocknungs- und/oder Entwässerungsprozess erhaltenen Kohlepartikel ergeben einen Kohlestaub, der nahezu den gesamten Kohlenstoff der verarbeiteten Biomasse enthält und einen Brennwert im Wesentlichen gleich dem Brennwert von fossiler Braunkohle aufweist.
Die hydrothermale Karbonisierung ist eine exotherme Reaktion, d.h. beim Dehydratations- und Karbonisierungsprozess wird Reaktionsenergie in Form von Wärme freigesetzt.

Des Weiteren ist es bekannt, die hydrothermale Karbonisierung kontinuierlich oder quasikontinuierlich in einem Durchlaufverfahren zu vollziehen, wobei der Karbonisierungsprozess im Reaktorinnenraum während des Einbringens von neuer, zu karbonisierender Biomasse bzw. während der Entnahme des Kohlenschlamms aufrechterhalten wird. Dabei ist es nötig, zum einen den Reaktordruck, zum anderen die Temperatur im Reaktorinnenraum während des Einbringens der neu zu verarbeitenden Biomasse bzw. der Entnahme des Kohlenschlamms mit möglichst geringen Druck- und Temperaturschwankungen aufrechtzuerhalten.

Aus der DE 10 2009 055 976 A1 ist eine Vorrichtung bekannt, die eine Aufbereitungsanlage, eine Überführungsvorrichtung und eine Flugstrom-Vergasungsanlage umfasst. Mit Hilfe der Vorrichtung wird ein Synthesegas aus Biomasse durch Flugstromvergasung zu erzeugt. Dabei wird die Biomasse in der Aufbereitungsanlage einer Grobzerkleinerungsvorrichtung zugeführt, die stromabwärts über eine erste Schleuse mit einer druckbeaufschlagten Karbonisierungsanlage zur hydrothermalen Erzeugung von Karbonisierungskohle aus der Biomasse verbunden ist. Die Karbonisierungsanlage umfasst eine Vorwärmvorrichtung und einen stromabwärts der Vorwärmvorrichtung angeordneten Karbonisierungsreaktor, und ist stromabwärts über eine zweite Schleuse mit zumindest einer Fest-Flüssig-Trennvorrichtung zur Bereitstellung eines Brennstoffs verbunden.

Um durch das Einbringen neuer Biomasse keinen erheblichen Temperaturabfall im Reaktor hervorzurufen, ist es bekannt, aus dem Reaktorinnenraum Wasserdampf zu entnehmen und diesen Wasserdampf zur Vorwärmung der Biomasse zu verwenden.

Nachteilig hierbei ist, dass zur Erwärmung der Biomasse ein relativ großes Volumen an Wasserdampf entnommen werden muss, was dazu führt, dass der Druck im Reaktorinnenraum und damit auch die Temperatur starken Schwankungen unterworfen ist und damit der Karbonisierungsprozess nachteilig beeinflusst wird.

Ausgehend hiervon ist es Aufgabe der Erfindung, ein Verfahren und eine Vorrichtung zur hydrothermalen Karbonisierung von Biomasse im Durchlaufverfahren aufzuzeigen, die eine effiziente Erwärmung der Biomasse vor dem Einbringen in den Reaktor durch die während des Prozesses entstehende Wärmeenergie und einen möglichst gleichmäßigen, kontinuierlichen Dehydratations- und Karbonisierungsprozess im Reaktorinnenraum ermöglichen.

Die Aufgabe wird ausgehend vom Oberbegriff des unabhängigen Patentanspruchs 1 durch dessen kennzeichnende Merkmale gelöst. Eine Vorrichtung zur hydrothermalen Karbonisierung von Biomasse ist Gegenstand des nebengeordneten Patentanspruchs 10.

Bei dem erfindungsgemäßen Verfahren wird Biomasse durch eine Fördereinrichtung einer Vorwärmeinrichtung zugeführt, in der die Biomasse erwärmt wird, die erwärmte Biomasse wird zumindest einem Reaktor zugeführt, in dem die Biomasse dehydratisiert und karbonisiert wird und durch die Karbonisierung entstehender Kohleschlamm wird aus dem Reaktor entnommen. In dem zumindest einen Reaktor durch die Dehydratation entstehendes Dehydratwasser wird im flüssigen Zustand dem Reaktor entnommen, das Dehydratwasser unmittelbar der Vorwärmeinrichtung zugeführt und in der Vorwärmeinrichtung mit der Biomasse vermischt. Aufgrund der Tatsache, dass Wasser im flüssigen Zustand im Vergleich zu Wasserdampf eine größere Menge an Wärmeenergie pro Volumeneinheit aufweist, wird durch die Entnahme eines definierten Volumens von Dehydratwasser im flüssigen Zustand aus dem Reaktor eine größere Menge an Wärmeenergie der Vorwärmeinrichtung zugeführt als bei der Entnahme desselben Volumens an Wasserdampf. Damit muss zur Erzielung eines bestimmten Wärmeeintrags in die Biomasse ein im Vergleich zur Verwendung von Wasserdampf geringeres Volumen an Dehydratwasser entnommen werden, sodass der sich dort vollziehende Karbonisierungsprozess nur geringfügig beeinträchtigt wird.
Insbesondere bei Verwendung von Biomasse mit einem hohen Trockengehalt wird durch die Durchmischung der Biomasse mit dem Dehydratwasser eine verbesserte, gleichmäßigere Vorwärmung der Biomasse im Vergleich zu herkömmlich verwendeten Wärmetauschersystemen erreicht, da die Wärmetauscher bei der Verwendung relativ trockener Biomasse, insbesondere Biomasse mit einem Trockengehalt größer als 20% zur Verkrustung an den Wärmeübertragungsflächen neigen und dadurch der Wirkungsgrad der Wärmetauscher abnehmen.

Unter der unmittelbaren Zuführung des Dehydratwassers zur Vorwärmeinrichtung wird eine Zuführung beispielsweise mittels Rohrleitungen ohne weitere Vorrichtungen, insbesondere Verdampfer zum Entspannen des Wassers, verstanden. Unter unmittelbarer Zuführung ist jedoch auch eine Rohrleitung oder ein Rohrleitungssystem enthaltend zumindest eine Sperreinrichtung, insbesondere ein Ventil zum Verschluss der Vorwärmeinrichtung und/oder des Reaktors zu verstehen.

Erfindungsgemäß erfolgt die Entnahme des Dehydratwassers aus dem zumindest einen Reaktor in Abhängigkeit des Volumenstroms der Biomassezuführung. Eine derart gesteuerte Entnahme des Dehydratwassers bewirkt einen möglichst homogenen Karbonisierungsprozess im Reaktorinnenraum, wobei die die Karbonisierung bewirkenden Prozessparameter, insbesondere der Druck und die Temperatur im Reaktorinnenraum durch die gesteuerte Entnahme des Dehydratwassers nahezu konstant gehalten werden können.

In einem bevorzugten Ausführungsbeispiel weist das der Vorwärmeinrichtung zugeführte Dehydratwasser eine Temperatur gleich oder im Wesentlichen gleich der Temperatur des Biomasse-Wasser-Gemischs im Reaktor auf. Damit wird eine hohe Wärmemenge der zu erwärmenden Biomasse zugeführt. Aufgrund des hohen Drucks des dem Reaktor entnommenen Dehydratwassers wird vorzugsweise eine Vorwärmeinrichtung in Form einer druckverschließbaren Kammer verwendet, so dass die Entspannung des Dehydratwassers in der Vorwärmeinrichtung erfolgen kann.

Weiterhin bevorzugt erfolgt die Entnahme des Dehydratwassers aus dem zumindest einen Reaktor in Abhängigkeit der Reaktortemperatur im Inneren des Reaktors und/oder dem Reaktordruck im Inneren des Reaktors. Eine derart gesteuerte Entnahme des Dehydratwassers bewirkt einen möglichst homogenen Karbonisierungsprozess im Reaktorinnenraum, wobei die die Karbonisierung bewirkenden Prozessparameter, insbesondere der Druck und die Temperatur im Reaktorinnenraum durch die gesteuerte Entnahme des Dehydratwassers nahezu konstant gehalten werden können.

Erfindungsgemäß wird vor dem Einbringen der Biomasse in den Reaktor der Druck in der Vorwärmeinrichtung auf einen Druck zumindest gleich dem Druck im Reaktor erhöht, wobei die Vorwärmeinrichtung durch eine druckdicht verschließbare Kammer gebildet ist. Durch eine derartige Druckerhöhung in der Vorwärmeinrichtung kann eine Pumpeinrichtung entfallen, die einen Übertrag der vorwärmten Biomasse aus der Vorwärmeinrichtung in den Reaktorinnenraum bewirkt. Es kann vielmehr ein Übertrag erfolgen, der lediglich durch die Schwerkrafteinwirkung auf die Biomasse bzw. das Gemisch aus Biomasse und Dehydratwasser erfolgt, d.h. die Biomasse bzw. das genannte Biomassegemisch wird aus der oberhalb des Reaktors angeordneten Vorwärmeinrichtung in den Reaktorinnenraum fallen gelassen. Alternativ ist es möglich, den Druck in der Vorwärmeinrichtung über den Druck im Reaktorinnenraum zu erhöhen, sodass ein durch den Überdruck bewirkter Übertrag von der Vorwärmeinrichtung in den Reaktorinnenraum erfolgt. Durch einen derartigen Überdruck in der Vorwärmeinrichtung wird eine Verstopfung des Auslasses der Vorwärmeinrichtung bzw. des Einlasses des Reaktors wirksam vermieden.

In einem weiteren bevorzugten Ausführungsbeispiel erfolgt der Dehydratations- und/oder Karbonisierungsprozess in mehreren Prozessstufen, wobei die einzelnen Prozessstufen zumindest teilweise in unterschiedlichen, in Reihe geschalteten Reaktoren vollzogen werden. Eine derartige Kaskadierung von Reaktoren bewirkt, dass der Durchsatz der zu verarbeitenden Biomasse erhöht werden kann, ohne dass Reaktoren mit einer zu großen Reaktorhöhe verwendet werden müssen. Nach dem Vollzug einer ersten Prozessstufe in einem ersten Reaktor wird das dort enthaltene Biomasse-Flüssigkeitsgemisch an den zumindest einen weiteren Reaktor übertragen und dort zumindest eine weitere Prozessstufe des Karbonisierungsprozesses vollzogen. Die Entnahme des durch den Karbonisierungsprozess entstehenden Kohleschlamms erfolgt aus dem Auslass des letzten Reaktors der Reaktorkaskade.

Besonders bevorzugt erfolgt bei der Verwendung mehrerer Reaktoren bzw. einer Reaktorkaskade der Übertrag des Biomasse-Flüssigkeitsgemischs von einem Reaktor auf den nächstfolgenden Reaktor durch einen bestehenden Druckunterschied in den Reaktorinnenräumen. Dadurch können Pumpeinrichtungen vermieden werden, die durch möglicherweise in der Biomasse enthaltene Fremdstoffe fehleranfällig sind.

In einem besonders bevorzugten Ausführungsbeispiel wird der zumindest eine Reaktor durch eine Durchleitung von Gasen oder Dämpfen temperaturstabilisiert. Insbesondere können durch einen in dem zumindest einen Reaktor vorgesehenen Wärmetauscher, der insbesondere ein Rohrwärmetauscher ist, Rauchgase aus einem Verbrennungsprozess oder Wasserdampf durchgeleitet werden. Derartige Rauchgase können insbesondere aus einem Biomasseofen oder einem Blockheizkraftwerk stammen. Zur Temperatursteuerung des Rauchgases oder Dampfes können Mischeinrichtungen vorgesehen sein, die eine gesteuerte Beimischung eines gewünschten Anteils an Frisch- bzw. Kaltluft zu dem Rauchgas bzw. Dampf ermöglichen. Dadurch kann der Wärmeeintrag in den Reaktorinnenraum durch den beigefügten Anteil an Frisch- bzw. Kaltluft gesteuert werden.

Besonders bevorzugt ist in die Rauchgasleitungen, die eine Ableitung des Rauchgases oder Dampfes aus den Reaktoren bewirken, ein Wärmetauscher eingebracht, mittels dem eine Restwärmeausnutzung des im Rauchgas oder Dampf enthaltenen Wärmeenergie bewirkt wird. Dadurch kann die Effizienz der Anlage weiter gesteigert werden.

Besonders bevorzugt ist in der an den Auslass des Reaktors anschließenden Austragsleitung, mittels der der Kohleschlamm aus dem Reaktor ausgeleitet wird, ebenfalls ein Wärmetauscher vorgesehen, mittels dem dem heißen Kohleschlamm Wärmeenergie entzogen wird, die vorzugsweise einem Wärmespeicher zugeführt wird. Damit kann wiederum eine Effizienzsteigerung erzielt werden.

Besonders bevorzugt ist in der Austragsleitung für den Kohleschlamm eine Filtereinrichtung, insbesondere ein Kantenspaltfilter vorgesehen, mittels dem Fremdstoffe im Kohleschlamm abgeschieden werden können. Derartige Fremdstoffe können beispielsweise Kunststoffe sein, die durch die Hitzeeinwirkung im Reaktor verklumpen und durch die Filtereinrichtung einfach und kostengünstig ausgefiltert werden können.

Die Erfindung betrifft des Weiteren eine Vorrichtung zur hydrothermalen Karbonisierung von Biomasse im Durchlauf, bei der die Biomasse mittels einer Fördereinrichtung zu einer Vorwärmeinrichtung transportiert wird, in der die Biomasse erwärmt wird. Des Weiteren weist die Vorrichtung zumindest einen Reaktor auf, in dem die Biomasse dehydratisiert und karbonisiert wird. Am Reaktor ist eine Entnahmeeinrichtung für durch die Dehydratation entstehendes Dehydratwasser vorgesehen und die Entnahmeeinrichtung ist unmittelbar über eine Fluidverbindung mit der Vorwärmeinrichtung gekoppelt ist. Dadurch kann Dehydratwasser im flüssigen Zustand unmittelbar von dem zumindest einen Reaktor der Vorwärmeinrichtung zugeführt und ein Wärmeeintrag in die in der Vorwärmeinrichtung enthaltende Biomasse erfolgen. Die Verwendung von Dehydratwasser im flüssigen Zustand birgt den wesentlichen Vorteil, dass Wasser im flüssigen Zustand eine hohe spezifische Masse im Vergleich zu Wasserdampf aufweist und damit der Wärmeeintrag pro entnommener Volumeneinheit von Dehydratwasser im flüssigen Zustand größer ist als der Wärmeeintrag resultierend aus der gleichen Volumeneinheit Wasserdampf.

Erfindungsgemäß ist die Vorwärmeinrichtung durch eine druckdicht verschließbare Kammer gebildet. Dadurch kann das unter Druck stehende Dehydratwasser ohne vorherige Entspannung der Vorwärmeinrichtung zugeführt werden, wobei durch diese Zuführung der Druck in der Vorwärmeinrichtung erhöht wird. Erfindungsgemäß ist die Vorwärmeinrichtung oberhalb des zumindest einen Reaktors vorgesehen, so dass ein Übertrag der vorgewärmten Biomasse in den Reaktor durch schwerkraftbedingtes Fallen erfolgen kann. Dadurch können Pumpen etc. zur Förderung der wässrigen Biomasse vermieden werden.

Besonders bevorzugt ist die Entnahmeeinrichtung zur Entnahme des Dehydratwassers aus einem mittleren Reaktorabschnitt ausgebildet, der zwischen dem oberen Reaktorabschnitt an dem die Aufgabe der Biomasse erfolgt einem unteren Reaktorabschnitt, an dem die Entnahme von Kohlenschlamm erfolgt, angeordnet ist. In diesem Bereich liegt während des Karbonisierungsprozesses eine Schicht von Dehydratwasser vor, sodass dieses beispielsweise durch eine Pumpeinrichtung oder durch den vorherrschenden Druckunterschied zwischen dem Reaktorinnenraum und der Vorwärmeinrichtung selbiger zugeführt werden kann.

In einem besonders bevorzugten Ausführungsbeispiel enthält der Reaktor einen Wärmetauscher, der zur Durchleitung von Rauchgasen oder Wasserdampf ausgebildet ist. Insbesondere ist dieser Wärmetauscher ein Rohrwärmetauscher, der beispielsweise mit einer automatisierten Reinigungseinrichtung zur Entfernung von aus der Durchleitung von Rauchgasen entstehenden Abgasrückständen ausgebildet ist. Die Rauchgase können hierbei beispielsweise aus einer Biomasseverbrennung in einem Biomasseofen, aus einem Abgasstrom eines Blockheizkraftwerks etc. stammen. Besonders bevorzugt wird der Rauchgasstrom durch Beimischung eines Anteils von Kalt- bzw. Frischluft in der Temperatur derart gesteuert, dass ein erforderlicher, gesteuerter Wärmeeintrag in den Reaktorinnenraum bzw. die dort enthaltene Biomasse bzw. Flüssigkeit erfolgt.

In einem weiteren bevorzugten Ausführungsbeispiel sind zumindest zwei Reaktoren vorgesehen, wobei ein Auslass des ersten Reaktors mit dem Einlass des zweiten Reaktors verbunden ist. Dadurch entsteht eine kaskadierte Reaktoranordnung, wobei der Karbonisierungsprozess mit seinen unterschiedlichen Prozessstufen verteilt auf die unterschiedlichen Reaktoren abläuft und durch die fluidische Verbindung des Auslasses des ersten Reaktors mit dem Einlass des zumindest einen weiteren Reaktors ein Übertrag des Reaktionsprodukts der ersten Prozessstufe in den zumindest einen weiteren Reaktor erfolgen kann. Dieser Übertrag kann mittels Pumpeinrichtungen oder bevorzugt über Druckunterschiede zwischen den Reaktoren erfolgen.

Besonders bevorzugt ist dem Auslass, aus dem der durch den Karbonisierungsprozess entstehende Kohleschlamm ausgefördert wird, in Förderrichtung folgend eine Filtereinrichtung vorgesehen, mittels der eine Fremdstoffabscheidung bewirkt wird. Insbesondere kleinere Fremdstoffe, beispielsweise Kunststoffe oder Folien, werden durch die Hitzeeinwirkung im Reaktorinnenraum derart verklumpt, dass sie anschließend über die Filtereinrichtung einfach und kostengünstig ausfiltriert werden können. Die Filtereinrichtung kann insbesondere ein Kantenspaltfilter sein. Dadurch ist es nicht erforderlich, im Bereich der Biomasseaufgabe oder der Fördereinrichtung, die den Eintrag der Biomasse in die Vorwärmeinrichtung bewirkt, jegliche Fremdstoffe abzutrennen bzw. auszusortieren. Insbesondere die schwierig auszusortierenden, kleinen Fremdstoffe können in der Biomasse verbleiben und werden anschließend durch die Filtereinrichtung vom Kohleschlamm getrennt.

Unter Dehydratwasser im Sinne der Erfindung wird im Reaktor vorhandene Flüssigkeit verstanden, die durch der Biomasse enthaltene bzw. beigemischte Flüssigkeit und/oder während des Dehydratationsprozess von der Biomasse abgespaltene Wassermoleküle gebildet wird.

Der Ausdruck "im Wesentlichen" bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung des Ausführungsbeispiels und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird nachfolgend anhand eines Ausführungsbeispiels im Zusammenhang mit den Figuren näher erläutert. Es zeigen:
- Fig. 1: beispielhaft eine erfindungsgemäße Vorrichtung zur hydrothermalen Karbonisierung von Biomasse mit einem einzelnen Reaktor in einer schematischen Darstellung;
- Fig. 2: beispielhaft eine erfindungsgemäße Vorrichtung zur hydrothermalen Karbonisierung von Biomasse mit mehreren kaskadierten Reaktoren in einer schematischen Darstellung.

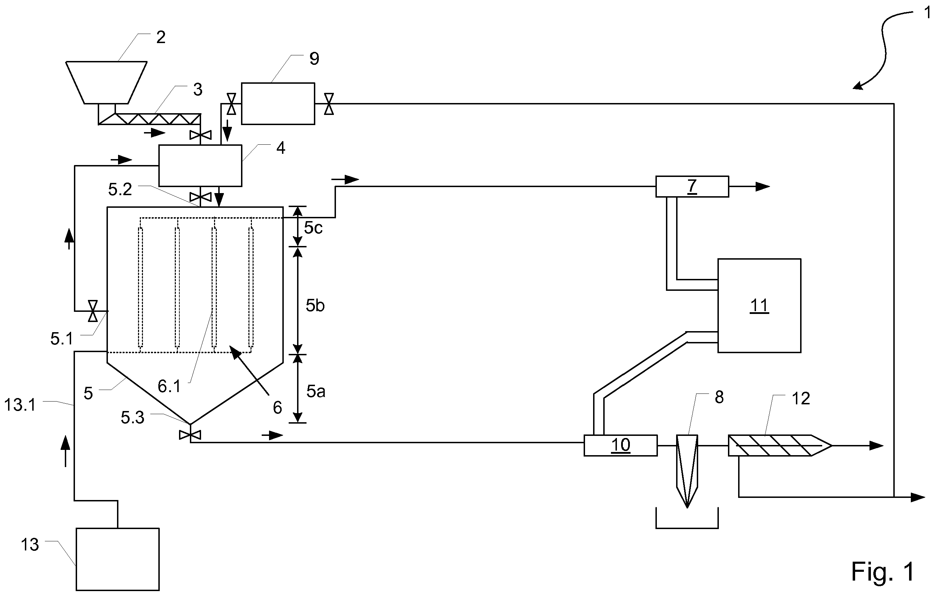

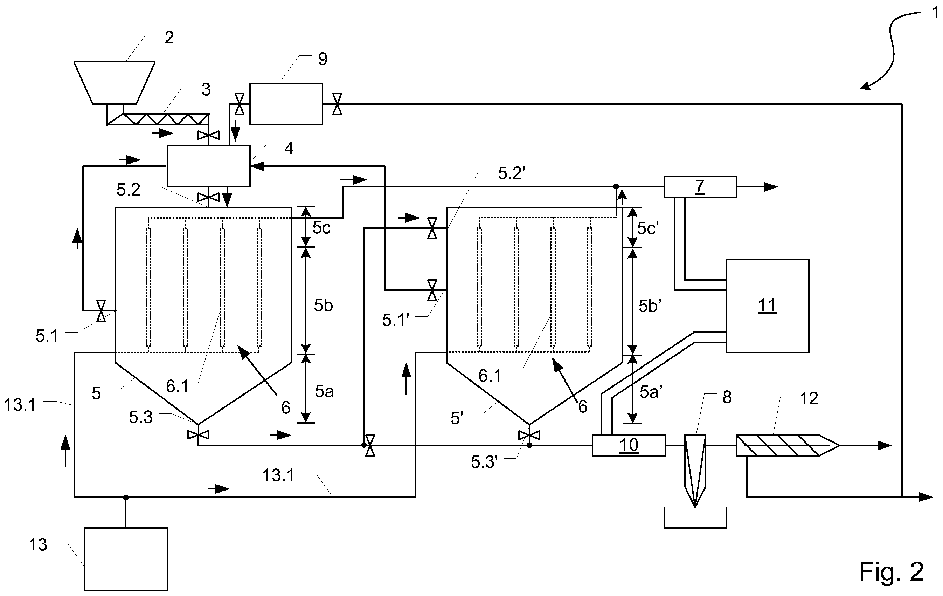

In den Figuren 1 und 2 sind mit dem Bezugszeichen 1 Anlagen zur hydrothermalen Karbonisierung (HTC) gezeigt. Die Anlage 1 ist hierbei zum Durchführen eines HTC-Verfahrens als Durchlaufverfahren ausgebildet, d.h., dass die Anlage 1 einen kontinuierlichen oder quasikontinuierlichen Betrieb beim Einbringen der Biomasse in den Reaktor bzw. bei der Entnahme der Kohle aus dem Reaktor 5, 5' ermöglicht, ohne dass der Karbonisierungsprozess im Reaktorinnenraum vollständig unterbrochen werden würde.

Die in der Anlage 1 verarbeitete Biomasse, die insbesondere trockene Biomasse mit einem Trockengehalt ≥ 30% sein kann, wird an einer Biomasseaufgabe 2 in die Anlage 1 eingebracht und mittels einer Fördereinrichtung 3 gesteuert bzw. zeitlich intermittierend der Vorwärmeinrichtung 4 zugeführt. Die Fördereinrichtung 3 kann hierbei eine Förderschnecke, ein Förderband, ein Schubbodenförderer oder bei Biomasse mit hohem Wasseranteil auch eine Pumpe sein. In der Vorwärmeinrichtung 4, die vorzugsweise ein druckfester, abgesehen von den Zu- und Ableitungen geschlossener Behälter ist, wird die Biomasse erwärmt, und zwar durch unmittelbares Einbringen des Dehydratwassers in die Biomasse und durch Vermischen des Dehydratwassers mit der Biomasse, wobei das Dehydratwasser zumindest teilweise durch Dehydratation im Reaktor 5, 5' entsteht. Dieses Wasser weist eine Temperatur im Bereich zwischen 180°C und 240°C auf und kann aufgrund seiner hohen spezifischen Masse optimal für einen Wärmeeintrag in die zuvor zu erwärmende Biomasse verwendet werden. Beim Zuführen des Dehydratwassers ist vorzugsweise die Vorwärmeinrichtung 4 druckdicht verschlossen.

Zur Entnahme des Dehydratwassers aus dem Reaktor 5, 5' ist vorzugsweise in zwischen dem oberen und dem unteren Reaktorabschnitt 5a, 5a', 5c, 5c' liegenden mittleren Reaktorabschnitt 5b, 5b' eine Entnahmeeinrichtung 5.1, 5.1' vorgesehen, über die das Dehydratwasser vorzugsweise über zumindest ein Ventil gesteuert entzogen werden kann und über eine unmittelbare fluidische Verbindung der Vorwärmeinrichtung 4 zugeführt werden kann.

Nach der zumindest teilweisen Vorwärmung der Biomasse wird vorzugsweise der Druck innerhalb der Vorwärmeinrichtung 4, der bereits durch die Zuführung des Dehydratwassers angestiegen ist, auf einen Druck zumindest gleich dem Druck im Inneren des Reaktors 5 erhöht, wobei Drücke von 10 bar bis 33 bar bevorzugt sind. Die Druckerhöhung erfolgt mittels eines Druckerzeugers 9 oder einem mit dem Druckerzeuger 9 gekoppelten Druckspeicher. Nach der Erhöhung des Drucks in der Vorwärmeinrichtung 4 wird die vorgewärmte Biomasse bzw. das Gemisch der Biomasse mit dem Dehydratwasser über den Einlass 5.2 dem Reaktor 5 zugeführt. Für den Fall, dass in der Vorwärmeinrichtung 4 der gleiche Druck wie im Reaktor 5 vorherrscht, wird die Biomasse schwerkraftbedingt in den Reaktor 5 eingebracht. Bevorzugt ist eine Erhöhung des Drucks in der Vorwärmeinrichtung 4 über den Druck im Reaktor 5, sodass ein Verstopfen des Auslasses der Vorwärmeinrichtung 4 bzw. des Einlasses 5.2 des Reaktors 5 wirksam vermieden wird.

Nach dem Einbringen der Biomasse in den Reaktor 5 wird diese Biomasse der hydrothermalen Karbonisierung unterzogen, wobei aus der Biomasse in dem Dehydratationsprozess Wassermoleküle abgespalten werden und dabei Kohlepartikel entstehen, die sich im unteren Reaktorabschnitt 5a ablagern.

Zur Erhöhung der Durchsatzrate der verarbeitbaren Biomasse ist es möglich, die Prozessstufen, die zur Karbonisierung der Biomasse führen, in mehreren, kaskadiert angeordneten Reaktoren 5, 5' zu vollziehen (Fig. 2). Hierbei ist der Auslass 5.3 des ersten Reaktors 5 mit dem Einlass 5.2' des zumindest einen weiteren Reaktors 5' verbunden, sodass ein erster Karbonisierungsteilprozess in dem ersten Reaktor 5 und ein weiterer Karbonisierungsteilprozess in dem zumindest einen weiteren Reaktor 5' vollzogen wird. Bei einer derart kaskadierten Anordnung der Reaktoren 5, 5' erfolgt die ausschließliche Entnahme des Kohleschlamms an dem Auslass 5.3' des weiteren Reaktors 5'.

Ferner ist bei dem Vorsehen mehrerer Reaktoren 5, 5' erfindungsgemäß auch vorgesehen, dass an dem zumindest einen weiteren Reaktor 5' ebenfalls eine Entnahmeeinrichtung 5.1' für Dehydratwasser vorgesehen ist, das ebenfalls der Vorwärmeinrichtung 4 zum Wärmeeintrag in die Biomasse zugeführt wird.

In einem bevorzugten Ausführungsbeispiel werden der in den Reaktor eingebrachten Biomasse ebenfalls Katalysatoren beigefügt, die eine Versäuerung bzw. Alkalisierung der Biomasse bewirken, wobei durch den Grad der Zugabe derartiger Katalysatoren die Struktur der entstehenden Kohlepartikel bestimmt wird. Ferner kann durch geeignete Zugabe von Katalysatoren der Karbonisierungsprozess beschleunigt werden. Aus dem Auslass 5.3 des Reaktors 5, bzw. dem Auslass 5.3' des weiteren Reaktors 5' bei kaskadierten Reaktoren 5, 5' wird ein wässriger Kohleschlamm entnommen, der zur Restwärmeausnutzung über einen Wärmetauscher 10 geführt wird. Die Entnahme des Kohlenschlamms erfolgt hierbei vorzugsweise kontinuierlich, insbesondere gesteuert über den Füllstand in den Reaktoren 5, 5'. Über den Wärmetauscher 10 wird dabei dem Kohleschlamm zumindest teilweise die darin enthaltende Wärmeenergie entzogen. Diese Wärmeenergie wird einem Wärmespeicher 11 zugeführt, sodass der als Zwischenpuffer für die entzogene Wärmeenergie fungiert.

Der Kohleschlamm wird ferner über eine Filtereinrichtung 8 geführt, die vorzugsweise dem Wärmetauscher 10 nachgeschaltet vorgesehen ist, sodass der bereits zumindest größtenteils abgekühlte Kohleschlamm die Filtereinrichtung 8 durchfließt und dabei die im Kohleschlamm enthaltenden Fremdstoffe abgeschieden werden. Derartige Fremdstoffe können in der Biomasse enthaltene Kunststoffe, Metalle etc. sein. Vorzugsweise ist eine weitere Fremdstoffsortierung im Bereich der Biomasseaufgabe 2 oder der Fördereinrichtung 3 vorgesehen, mittels der grobe Fremdstoffe aus der zu verarbeitenden Biomasse aussortiert werden. Der durch die Filtereinrichtung 8 gefilterte Kohleschlamm wird einer Trocknungs- und Entwässerungseinrichtung 12 zugeführt, in der der Kohleschlamm in staubförmige Kohlepartikel bzw. in Kohlestaub umgewandelt wird. Dieser Kohlestaub kann entweder direkt in ein Vorratslager eingeblasen oder einer Pelletiereinrichtung zugeführt werden, in der die Kohlepartikel durch Zugabe von Stärke, insbesondere von Mais und/oder Kartoffelstärke vernetzt und in Pellets verpresst wird.

Die beim Entwässerungsvorgang entstehende Flüssigkeit kann abhängig von der verwendeten Biomasse entweder direkt als Dünger verwendet werden oder bei Verwendung von phosphathaltiger bzw. schwermetallhaltiger Biomasse ausgefällt und abfiltriert werden, sodass diese Phosphate und Schwermetalle zumindest größtenteils aus der Flüssigkeit entfernt werden. Ein Teil der mittels der Trocknungs- und Entwässerungseinrichtung 12 aus dem Kohlenschlamm entzogenen Flüssigkeit kann prozessintern weiterverwendet und dem Druckerzeuger 9 zugeführt werden, sodass die Flüssigkeit zur Druckerhöhung in der Vorwärmeinrichtung 4 verwendet werden kann.

Bevorzugt ist die die Anlage 1 mit einer Heizeinrichtung 13 verbunden, die beispielsweise ein Biomasseofen, ein Blockheizkraftwerk oder eine fossilen Brennstoff benutzende Heizeinrichtung sein kann. Die aus der Heizeinrichtung 13 entstehenden Gase, insbesondere Rauchgase werden dem Reaktor 5 bzw. den Reaktoren 5, 5' über Rauchgasleitungen 13.1 zugeführt. Im Inneren der Reaktoren 5, 5' ist jeweils zumindest ein Wärmetauscher 6 vorgesehen, der insbesondere ein Rohrwärmetauscher ist und mehrere vorzugsweise vertikal angeordnete Rohrelemente 6.1 aufweist, die mit den Rauchgasleitungen 13.1 verbunden sind und vom Rauchgas durchströmt werden. Dadurch wird eine Erwärmung der im Reaktorinneren enthaltenen Biomasse bzw. Flüssigkeit bewirkt. Nach dem Durchströmen des Wärmetauschers 6 werden die Rauchgase aus den Reaktoren 5, 5' geführt und vorzugsweise einem Wärmetauscher 7 zugeführt, mittels dem dem Rauchgas Restwärmeenergie entzogen wird und dem Wärmespeicher 11 zugeführt wird.

Bevorzugt ist in den Rauchgasleitungen 13.1 zwischen der Heizeinrichtung 13 und den Reaktoren 5, 5' eine Mischeinrichtung vorgesehen, die eine Vermischung des Rauchgases mit einer gesteuerten Menge Kaltluft bzw. Frischluft ermöglicht. Dadurch wird die Rauchgastemperatur bzw. der Wärmeeintrag in die Reaktoren 5, 5' über den Wärmetauscher 6 gesteuert. Der benötigte Wärmeeintrag in die Reaktoren 5, 5' hängt maßgeblich von der verwendeten Biomasse bzw. dem Trockenanteil dieser Biomasse ab, wobei Biomasse mit einem höheren Trockenanteil einen geringeren Wärmeeintrag benötigt als Biomasse mit einem erhöhten Trockenanteil. Durch die gesteuerte Zuführung von Rauchgas kann dem jeweiligen benötigten Wärmebedarf abhängig von der bearbeiteten Biomasse Rechnung getragen werden.

Die Erfindung wurde voranstehend an einem Ausführungsbeispiel beschrieben. Es versteht sich, dass zahlreiche Modifikationen und Änderungen möglich sind, ohne dass hierdurch der Erfindungsgedanke verlassen wird.

### Bezugszeichenliste

- 1: HTC-Anlage
- 2: Biomasseaufgabe
- 3: Fördereinrichtung
- 4: Vorwärmeinrichtung
- 5, 5': Reaktor
- 5a, 5a': unterer Reaktorabschnitt
- 5b, 5b': mittlerer Reaktorabschnitt
- 5c, 5c': oberer Reaktorabschnitt
- 5.1, 5.1': Entnahmeeinrichtung
- 5.2, 5.2': Einlass
- 5.3, 5.3': Auslass
- 6: Wärmetauscher
- 6.1: Rohrelement
- 7: Wärmetauscher
- 8: Filtereinrichtung
- 9: Druckerzeuger
- 10: Wärmetauscher
- 11: Wärmespeicher
- 12: Trocknungs- und Entwässerungseinrichtung
- 13: Heizeinrichtung
- 13.1: Rauchgasleitung

## Patentansprüche

1. Verfahren zur hydrothermalen Karbonisierung von Biomasse im Durchlauf, bei dem Biomasse durch eine Fördereinrichtung (3) einer Vorwärmeinrichtung (4) zugeführt wird, in der die Biomasse erwärmt wird, bei dem die erwärmte Biomasse zumindest einem Reaktor (5) zugeführt wird, in dem die Biomasse dehydratisiert und karbonisiert wird und bei dem durch die Karbonisierung entstehender Kohleschlamm aus dem Reaktor (5) entnommen wird, wobei in dem zumindest einen Reaktor (5, 5') durch die Dehydratation entstehendes Dehydratwasser im flüssigen Zustand in Abhängigkeit von dem Volumenstrom der Biomassezuführung dem Reaktor (5, 5') entnommen wird, das Dehydratwasser unmittelbar der Vorwärmeinrichtung (4) zugeführt und in der Vorwärmeinrichtung (4) mit der Biomasse vermischt wird, **dadurch gekennzeichnet, dass** vor dem Einbringen der Biomasse in den Reaktor (5) der Druck in der Vorwärmeinrichtung (4) mittels eines Druckerzeugers (9) durch Einbringen einer Flüssigkeit und/oder eines Gases auf einen Druck zumindest gleich dem Druck im Reaktor (5) erhöht wird, wobei die Vorwärmeinrichtung (4) durch eine druckdicht verschließbare Kammer gebildet ist.

2. Verfahren nach Anspruch 1, **dadurch gekennzeichnet, dass** das der Vorwärmeinrichtung zugeführte Dehydratwasser eine Temperatur gleich oder im Wesentlichen gleich der Temperatur des Biomasse-Wasser-Gemischs im Reaktor (5, 5') aufweist.

3. Verfahren nach Anspruch 1 oder 2, **dadurch gekennzeichnet, dass** die Entnahme von Dehydratwasser aus dem zumindest einen Reaktor (5) in Abhängigkeit der Reaktortemperatur und/oder des Reaktordrucks erfolgt.

4. Verfahren nach einem der vorhergehenden Ansprüche, **dadurch gekennzeichnet, dass** der Dehydratations- und/oder Karbonisierungsprozess in mehreren Prozessstufen erfolgt, wobei die Prozessstufen zumindest teilweise in unterschiedlichen, in Reihe miteinander verbundenen Reaktoren (5, 5') vollzogen werden.

5. Verfahren nach Anspruch 4, **dadurch gekennzeichnet, dass** der Übertrag des Reaktionsprodukts von einem Reaktor (5) zu dem zumindest einen weiteren Reaktor (5) mittels zumindest einer Fördereinrichtung oder durch einen Druckunterschied zwischen den Reaktoren (5, 5') erfolgt.

6. Verfahren nach einem der vorhergehenden Ansprüche, **dadurch gekennzeichnet, dass** der zumindest eine Reaktor (5, 5') durch eine Durchleitung von Gasen oder Dämpfen temperaturstabilisiert wird.

7. Verfahren nach Anspruch 6, **dadurch gekennzeichnet, dass** als Gase Rauchgase aus einem Verbrennungsprozess oder Wasserdampf verwendet werden und/oder dass die Gase oder Dämpfe durch mindestens einen in dem zumindest einen Reaktor vorgesehenen Wärmetauscher (6) geleitet werden.

8. Verfahren nach einem der Ansprüche 6 bis 7, **dadurch gekennzeichnet, dass** die zur Temperaturstabilisierung verwendeten Gase oder Dämpfe nach der Durchleitung durch den zumindest einen Reaktor (5, 5') durch einen weiteren Wärmetauscher (7) geführt werden.

9. Verfahren nach einem der vorhergehenden Ansprüche, **dadurch gekennzeichnet, dass** der aus dem Reaktor (5, 5') entnommene Kohleschlamm durch eine Filtereinrichtung (8) zur Fremdstoffabscheidung geführt wird.

10. Vorrichtung zur hydrothermalen Karbonisierung von Biomasse im Durchlauf, mit einer Fördereinrichtung (3) für Biomasse zu einer Vorwärmeinrichtung (4), in der die Biomasse erwärmt wird, mit zumindest einem Reaktor (5, 5'), in dem die Biomasse dehydratisiert und karbonisiert wird, wobei am Reaktor (5, 5') eine Entnahmeeinrichtung (5.1, 5.1') für durch die Dehydratation entstehendes Dehydratwasser vorgesehen ist und dass die Entnahmeeinrichtung (5.1, 5.1') über zumindest eine Fluidverbindung unmittelbar mit der Vorwärmeinrichtung (4) gekoppelt ist, **dadurch gekennzeichnet, dass** ein Druckerzeuger (9) vorgesehen ist, um den Druck in der Vorwärmeinrichtung (4) durch Einbringen einer Flüssigkeit und/oder eines Gases auf einen Druck zumindest gleich dem Druck im Reaktor (5) zu erhöhen und dass die Vorwärmeinrichtung (4) durch eine druckdicht verschließbare Kammer gebildet ist, die oberhalb des zumindest einen Reaktors (5, 5') vorgesehen ist.

11. Vorrichtung nach Anspruch 10, **dadurch gekennzeichnet, dass** der Reaktor einen Wärmetauscher (6) enthält, der zur Durchleitung von Rauchgasen oder Wasserdampf ausgebildet ist.

12. Vorrichtung nach einem der Ansprüche 10 und 11, **dadurch gekennzeichnet, dass** zumindest zwei Reaktoren (5, 5') vorgesehen sind, wobei ein Auslass (5.3) des ersten Reaktors (5) mit dem Einlass (5.2') des zweiten Reaktors (5') verbunden ist.

13. Vorrichtung nach einem der Ansprüche 10 bis 12, **dadurch gekennzeichnet, dass** zumindest zwei Reaktoren (5, 5') vorgesehen sind und dass die Reaktoren (5, 5') derart ausgebildet und miteinander gekoppelt sind, dass in den Reaktoren (5, 5') jeweils bestimmte Prozessstufen der hydrothermalen Karbonisierung vollzogen werden.

14. Vorrichtung nach einem der Ansprüche 10 bis 13, **dadurch gekennzeichnet, dass** in Förderrichtung nach dem Auslass (5.3, 5.3') des Reaktors (5, 5') eine Filtereinrichtung (8) zur Fremdstoffabscheidung vorgesehen ist.

## Claims

1. A method for the hydrothermal carbonization of biomass during throughput, wherein biomass is fed by a conveying device (3) to a preheating device (4) in which the biomass is heated, wherein the heated biomass is fed to at least one reactor (5) in which the biomass is dehydrated and carbonized and wherein coal slurry generated by the carbonization is removed from the reactor (5), wherein dehydration-water produced by dehydration in the at least one reactor (5, 5') is removed from the reactor (5, 5') in the liquid state depending on the volume flow of the biomass feed, wherein the dehydration-water is fed directly to the preheating device (4) and mixed with the biomass in the preheating device (4), **characterized in that** before the biomass is introduced into the reactor (5) the pressure in the preheating device (4) is increased by means of a pressure generator (9) to a pressure at least equal to the pressure in the reactor (5) by introducing a liquid and/or a gas, wherein the preheating device (4) is formed by a chamber that can be closed in a pressure-tight manner.

2. The method according to claim 1, **characterized in that** the dehydration-water fed to the preheating device has a temperature equal to or substantially equal to the temperature of the biomass/water mixture in the reactor (5, 5').

3. The device according to claim 1 or 2, **characterized in that** the removal of dehydration-water from the at least one reactor (5) takes place depending on the reactor temperature and/or the reactor pressure.

4. The method according to one of the preceding claims, **characterized in that** the dehydration and/or carbonization process takes place in multiple process stages, wherein the process stages are completed at least in part in different reactors (5, 5') connected to one another in series.

5. The method according to claim 4, **characterized in that** the carryover of the reaction product from one reactor (5) to the at least one other reactor (5) takes place by means of at least one conveying device or by a pressure difference between the reactors (5, 5').

6. The device according to one of the preceding claims, **characterized in that** the at least one reactor (5, 5') is temperature-stabilized by a conveyance of gases or vapours.

7. The method according to claim 6, **characterized in that** flue gases from a combustion process or steam are used as gases and/or that the gases or vapours are conducted through a heat exchanger (6) provided in the at least one reactor.

8. The method according to one of claims 6 to 7, **characterized in that** the gases or vapours used for temperature stabilization are conducted through a further heat exchanger (7) following conveyance through the at least one reactor (5, 5').

9. The method according to one of the preceding claims, **characterized in that** the coal slurry removed from the reactor (5, 5') is conducted through a filter device (8) to separate foreign substances.

10. A device for the hydrothermal carbonization of biomass during throughput, having a device for conveying (3) biomass to a preheating device (4) in which the biomass is heated, having at least one reactor (5, 5') in which the biomass is dehydrated and carbonized, wherein an extraction device (5.1, 5.1') for dehydration-water produced by dehydration is provided at the reactor (5, 5') and that the extraction device (5.1, 5.1') is directly coupled via at least one fluid connection with the preheating device (4), **characterized in that** a pressure generator (9) is provided in order to increase the pressure in the preheating device (4) by introducing a liquid and/or a gas to a pressure at least equal to the pressure in the reactor (5) and that the preheating device (4) is formed by a chamber that can be closed in a pressure-tight manner which is provided above the at least one reactor (5, 5').

11. The device according to claim 10, **characterized in that** the reactor contains a heat exchanger (6) which is designed for the conveyance of flue gases or steam.

12. The device according to one of claims 10 and 11, **characterized in that** at least two reactors (5, 5') are provided, wherein an outlet (5.3) of the first reactor (5) is connected to the inlet (5.2') of the second reactor (5').

13. The device according to one of claim 10 to 12, **characterized in that** at least two reactors (5, 5') are provided and that the reactors (5, 5') are configured and coupled with one another in such a manner that certain process steps of the hydrothermal carbonization are carried out in the respective reactors (5, 5').

14. The device according to one of claims 10 to 13, **characterized in that** a filter mechanism (8) for the separation of foreign substances is provided downstream of the outlet (5.3, 5.3') of the reactor (5, 5') in the conveying direction.

## Revendications

1. Procédé destiné à la carbonisation hydrothermale de biomasse au passage, lors duquel de la biomasse est alimentée par un système de convoyage (3) vers un système de préchauffage (4) dans lequel la biomasse est chauffée, lors duquel, on alimente la biomasse chauffée dans au moins un réacteur (5) dans lequel la biomasse est déshydratée et carbonisée et lors duquel, de la boue de charbon produite par la carbonisation est prélevée hors du réacteur (5), dans l'au moins un réacteur (5, 5'), de l'eau de déshydratation produite par la déshydratation étant prélevée du réacteur (5, 5'), à l'état liquide, en fonction du débit volumétrique de l'alimentation de la biomasse, l'eau de déshydratation étant directement alimentée vers le système de préchauffage (4) et mélangée dans le système de préchauffage (4) avec la biomasse, **caractérisé en ce qu'**avant l'introduction de la biomasse dans le réacteur (5), la pression est augmentée dans le système de préchauffage (4) au moyen d'un générateur de pression (9), par introduction d'un liquide et/ou d'un gaz à une pression au moins égale à la pression dans le réacteur (5), le système de préchauffage (4) étant formé par une chambre pouvant se fermer de manière étanche à la pression.

2. Procédé selon la revendication 1, **caractérisé en ce que** l'eau de déshydratation alimentée vers le système de préchauffage présente une température identique ou sensiblement identique à la température du mélange constitué de la biomasse et de l'eau dans le réacteur (5, 5').

3. Procédé selon la revendication 1 ou 2, **caractérisé en ce que** le prélèvement d'eau de déshydratation hors de l'au moins un réacteur (5) s'effectue en fonction de la température dans le réacteur et/ou de la pression dans le réacteur.

4. Procédé selon l'une quelconque des revendications précédentes, **caractérisé en ce que** le processus de déshydratation et/ou de carbonisation s'effectue en plusieurs étapes de procédés, les étapes de procédé étant accomplies au moins en partie dans différents réacteurs (5, 5') reliés en série les uns aux autres.

5. Procédé selon la revendication 4, **caractérisé en ce que** le transfert du produit de la réaction d'un réacteur (5) vers l'au moins un réacteur (5) supplémentaire s'effectue au moyen d'au moins un système de convoyage ou par une pression différentielle entre les réacteurs (5, 5').

6. Procédé selon l'une quelconque des revendications précédentes, **caractérisé en ce que** l'au moins un réacteur (5, 5') est stabilisé en température par un passage de gaz ou de vapeurs.

7. Procédé selon la revendication 6, **caractérisé en ce qu'**en tant que gaz, on utilise des gaz de fumée issus d'un processus de combustion ou de la vapeur d'eau et/ou **en ce que** les gaz ou les vapeurs sont dirigés à travers au moins un échangeur thermique (6) prévu dans l'au moins un réacteur.

8. Procédé selon l'une quelconque des revendications 6 à 7, **caractérisé en ce qu'**après le passage à travers l'au moins un réacteur (5, 5'), les gaz ou les vapeurs utilisés pour la stabilisation de température sont conduits à travers un échangeur thermique (7) supplémentaire.

9. Procédé selon l'une quelconque des revendications précédentes, **caractérisé en ce que** la boue de charbon prélevée hors du réacteur (5, 5') est conduite à travers un système de filtration (8) pour la séparation des corps étrangers.

10. Dispositif destiné à la carbonisation hydrothermale de biomasse au passage, avec un système de convoyage (3) de la biomasse vers un système de préchauffage (4), dans lequel la biomasse est chauffée, avec au moins un réacteur (5, 5'), dans lequel la biomasse est déshydratée et carbonisée, sur le réacteur (5, 5') étant prévu un système de prélèvement (5.1, 5.1') pour de l'eau de déshydratation produite par la déshydratation et le système de prélèvement (5.1, 5.1') étant couplé directement par l'intermédiaire d'au moins une liaison fluidique avec le système de préchauffage (4), **caractérisé en ce qu'**il est prévu un générateur de pression (9) pour augmenter la pression dans le système de préchauffage (4) par introduction d'un liquide et/ou d'un gaz à une pression au moins égale à la pression dans le réacteur (5) et **en ce que** le système de préchauffage (4) est formé par une chambre pouvant se fermer de manière étanche à la pression, qui est prévue au-dessus de l'au moins un réacteur (5, 5').

11. Dispositif selon la revendication 10, **caractérisé en ce que** le réacteur contient un échangeur thermique (6) qui est conçu pour le passage de gaz de fumée ou de vapeur d'eau.

12. Dispositif selon l'une quelconque des revendications 10 et 11, **caractérisé en ce qu'**au moins deux réacteurs (5, 5') sont prévus, une sortie (5.3) du premier réacteur (5) étant reliée avec l'entrée (5.2') du deuxième réacteur (5').

13. Dispositif selon l'une quelconque des revendications 10 à 12, **caractérisé en ce qu'**au moins deux réacteurs (5, 5') sont prévus et **en ce que** les réacteurs (5, 5') sont conçus et couplés les uns aux autres de telle sorte que dans les réacteurs (5, 5') soient accomplis chaque fois des étapes de processus déterminées de la carbonisation hydrothermale.

14. Dispositif selon l'une quelconque des revendications 10 à 13, **caractérisé en ce que** dans la direction de convoyage, en aval de la sortie (5.3, 5.3') du réacteur (5, 5'), il est prévu un système de filtration (8) pour la séparation des corps étrangers.
